# EUROPEAN PATENT APPLICATION

(11) **EP 4 836 050 A1**
(43) Date of publication of application: **04.11.2026**
(21) Application number: 23962846.4
(22) Date of filing: 29.12.2023
(51) Int. Cl.: H01M 10/0525, H01M 10/04

(54) **SECONDARY BATTERY AND ELECTRONIC APPARATUS**

(71) Applicant: Ningde Amperex Technology Limited, Ningde, Fujian 352100 (CN)
(72) Inventor: WANG, Chen, Ningde, Fujian 352100 (CN)
(74) Representative: Kraus & Lederer PartGmbB
(86) International application number: PCT/CN2023/143443
(87) International publication number: WO 2025/138172

(57) **Abstract**

A secondary battery and an electronic apparatus are provided. The secondary battery includes a housing, an electrode assembly and electrolyte accommodated in the housing, a metal plate connected to the electrode assembly, and an adhesive member. The electrode assembly includes a stacked first electrode sheet and second electrode sheet, where the first electrode sheet includes a first electrode sheet layer, and the second electrode sheet includes a second electrode sheet layer disposed adjacent to the first electrode sheet layer. The electrode assembly includes a first end and a second end opposite to each other. The adhesive member adheres the electrode assembly and the housing. The adhesive member includes a first side located on a side of the first end and a second side located on a side of the second end, where a distance between the first end and the first side is L1 mm, a distance between the second end and the second side is L2 mm, and L1 > L2. The electrode assembly includes a first region and a second region sequentially connected along a first direction, the adhesive member is disposed on the second region, and a spacing between the first electrode sheet layer and the second electrode sheet layer located in the first region is greater than a spacing between the first electrode sheet layer and the second electrode sheet layer located in the second region.

## Description

### TECHNICAL FIELD

This application relates to the field of battery technologies, and in particular, to a secondary battery and an electronic apparatus.

### BACKGROUND

Secondary batteries are widely applied to electric vehicles and consumer electronic products due to their advantages such as high energy density, high output power, and long cycle life. However, lithium-ion secondary batteries are prone to lithium precipitation during the cycling process. Lithium precipitation not only degrades battery performance and significantly shortens cycle life, but also limits the fast charging capacity of the battery, and may cause catastrophic consequences such as combustion and explosion.

### SUMMARY

An object of this application is to provide a secondary battery and an electronic apparatus that can mitigate lithium precipitation.

A first aspect of this application provides a secondary battery, including a housing, an electrode assembly, and a metal plate, where the electrode assembly is accommodated in the housing, and the metal plate is connected to the electrode assembly and extends out of the housing along a first direction. The electrode assembly includes a first electrode sheet, a separator, and a second electrode sheet sequentially stacked along a second direction perpendicular to the first direction, where the first electrode sheet includes a first electrode sheet layer, and the second electrode sheet includes a second electrode sheet layer disposed adjacent to the first electrode sheet layer in the second direction. The secondary battery further includes an adhesive member, where the electrode assembly further includes a first surface, and the adhesive member is disposed on the first surface and adheres the electrode assembly and the housing. In the first direction, the first surface includes first end and second end opposite to each other, the adhesive member includes a first side and a second side opposite to each other in the first direction, where the first side is closer to the first end than the second side, a distance between the first end and the first side is L1, a distance between the second end and the second side is L2, and L1 > L2. The electrode assembly includes a first region and a second region sequentially connected along the first direction, the adhesive member is disposed on the second region, and a spacing between the first electrode sheet layer and the second electrode sheet layer located in the first region is greater than a spacing between the first electrode sheet layer and the second electrode sheet layer located in the second region.

In the secondary battery of this application, the adhesive member is disposed on the surface of the electrode assembly, and the distance L1 between the first side of the adhesive member and the first end of the electrode assembly is greater than the distance L2 between the second side of the adhesive member and the second end of the electrode assembly, so that during the manufacturing pressing process, the pressure applied to the second region of the electrode assembly is greater than the pressure applied to the first region, thereby making the spacing between the first electrode sheet layer and the second electrode sheet layer located in the first region greater than the spacing between the first electrode sheet layer and the second electrode sheet layer located in the second region, and allowing the first region to retain more electrolyte, which is conducive to mitigating lithium precipitation at the position where the first region is located.

According to some embodiments of this application, in the first direction, a length of the electrode assembly is L, and 0.3 ≤ L1/L ≤ 0.6, ensuring that during the manufacturing pressing process, the pressure applied to the second region of the electrode assembly is greater than the pressure applied to the first region, thereby making the spacing between the first electrode sheet layer and the second electrode sheet layer located in the first region greater than the spacing between the first electrode sheet layer and the second electrode sheet layer located in the second region, while ensuring a firm adhesion between the electrode assembly and the housing, which is conducive to improving the drop pass rate and reducing the impact of the adhesive member on the volumetric energy density.

According to some embodiments of this application, 0.35 ≤ L1/L ≤ 0.45, which is more conducive to maintaining appropriate adhesion performance, improving the drop pass rate, reducing the impact on the volumetric energy density, and ensuring that the pressure applied to the second region is greater than the pressure applied to the first region, thereby making the spacing between the first electrode sheet layer and the second electrode sheet layer located in the first region greater than the spacing between the first electrode sheet layer and the second electrode sheet layer located in the second region.

According to some embodiments of this application, 0 ≤ L2/L ≤ 0.2, which is conducive to maintaining appropriate adhesion performance, improving the drop pass rate, and ensuring that the pressure applied to the second region is greater than the pressure applied to the first region, thereby making the spacing between the first electrode sheet layer and the second electrode sheet layer located in the first region greater than the spacing between the first electrode sheet layer and the second electrode sheet layer located in the second region.

According to some embodiments of this application, 0.05 ≤ L2/L ≤ 0.1, which is more conducive to maintaining appropriate adhesion performance, improving the drop pass rate, and ensuring that the pressure applied to the second region is greater than the pressure applied to the first region, thereby making the spacing between the first electrode sheet layer and the second electrode sheet layer located in the first region greater than the spacing between the first electrode sheet layer and the second electrode sheet layer located in the second region. This facilitates alleviating the lithium precipitation problem.

According to some embodiments of this application, in a third direction perpendicular to both the first direction and the second direction, the first surface includes a third end and a fourth end opposite to each other, the adhesive member includes a third side located on a side of the third end and a fourth side located on a side of the fourth end, where the first side, the third side, the second side, and the fourth side are sequentially connected; and in the third direction, a width of the electrode assembly is W, a distance between the third end and the third side is W1, a distance between the fourth end and the fourth side is W2 mm, where 0 ≤ W1/W ≤ 0.3, and 0 ≤ W2/W ≤ 0.3, which is conducive to ensuring a firm adhesion between the electrode assembly and the housing, improving the drop pass rate.

According to some embodiments of this application, 0.1 ≤ W1/W ≤ 0.25, and 0.1 ≤ W2/W ≤ 0.25.

According to some embodiments of this application, the adhesive member includes a plurality of sub-adhesive members, where the plurality of sub-adhesive members are spaced apart on the first surface, and a spacing between adjacent two sub-adhesive members is less than or equal to the smaller one of widths of the adjacent two sub-adhesive members. This ensures a sufficient adhesion area between the adhesive member and both the electrode assembly and the housing, and the spaced plurality of sub-adhesive members can disperse stress, thereby improving the drop pass rate.

According to some embodiments of this application, the electrode assembly is configured as a wound structure.

According to some embodiments of this application, the metal plate includes a first metal plate, the first metal plate is welded to the first electrode sheet, a weld mark is formed between the first metal plate and the first electrode sheet; and the secondary battery further includes an insulating layer, the insulating layer covering the weld mark and a portion of the first metal plate. By providing the insulating layer, the occurrence of puncture of separator caused by burrs in the weld mark can be reduced, lowering the risk of a short circuit caused by contact between the first electrode sheet and the second electrode sheet.

According to some embodiments of this application, viewed along the second direction, the adhesive member does not overlap with the first metal plate, and the adhesive member does not overlap with the insulating layer, which is conducive to improving the volumetric energy density.

According to some embodiments of this application, the adhesive member includes a first adhesive layer, a substrate layer, and a second adhesive layer sequentially stacked, the first adhesive layer is adhered to the housing, and the second adhesive layer is adhered to the electrode assembly.

According to some embodiments of this application, a thickness of the adhesive member is in a range of 10 mm to 50 mm. When the thickness of the adhesive member is in the above range, during the manufacturing pressing process, the difference between the pressure applied to the first region and the pressure applied to the second region is significant, thereby producing an electrode assembly where the spacing between the first electrode sheet layer and the second electrode sheet layer in the first region is greater than the spacing between the first electrode sheet layer and the second electrode sheet layer in the second region.

According to some embodiments of this application, the thickness of the adhesive member is in a range of 18 mm to 30 mm.

A second aspect of this application provides an electronic apparatus, including the secondary battery according to any one of the above.

### BRIEF DESCRIPTION OF DRAWINGS

FIG. 1 is a view of a secondary battery according to an embodiment of this application viewed along a second direction.
FIG. 2 is a view of an electrode assembly according to an embodiment of this application viewed along a first direction.
FIG. 3 is an enlarged view at a position III shown in FIG. 2.
FIG. 4 is a view of an electrode assembly according to an embodiment of this application viewed along an opposite direction of a second direction.
FIG. 5 is a schematic cross-sectional view of an adhesive member according to an embodiment of this application.
FIG. 6 is a view of an electrode assembly according to an embodiment of this application viewed along a second direction.

**Reference signs of main components**

| | |
|---|---|
| Secondary battery | 100 |
| Housing | 10 |
| Electrode assembly | 20 |
| First metal plate | 31 |
| Second metal plate | 32 |
| Main body portion | 11 |
| Packaging portion | 12 |
| First electrode sheet | 21 |
| First electrode sheet layer | 21a |
| Second electrode sheet | 22 |
| Second electrode sheet layer | 22a |
| Separator | 23 |
| First current collector | 211 |
| First active material layer | 212 |
| Second current collector | 221 |
| Second active material layer | 222 |
| First surface | 201 |
| Second surface | 202 |
| First end | 201a |
| Second end | 201b |
| Adhesive member | 50 |
| First side | 50a |
| Second side | 50b |
| First region | 20a |
| Second region | 20b |
| Weld mark | 25 |
| Insulating layer | 26, 27 |
| Third end | 201c |
| Fourth end | 201d |
| Third side | 50c |
| Fourth side | 50d |
| First adhesive layer | 501 |
| Substrate layer | 502 |
| Second adhesive layer | 503 |
| First direction | X |
| Second direction | Z |
| Third direction | Y |
| Sub-adhesive member | 51 |
| First edge | 51a |
| Second edge | 51b |
| Third edge | 51c |
| Fourth edge | 51d |

This application is further described with reference to the accompanying drawings in the following specific embodiments.

### DETAILED DESCRIPTION

The following clearly describes in detail the technical solutions in some embodiments of this application. Apparently, the described embodiments are only some rather than all of embodiments of this application. Unless otherwise defined, all technical and scientific terms used herein shall have the same meanings as commonly understood by persons skilled in the art to which this application relates. The terms used in the specification of this application are for description of specific embodiments only without any intention to limit this application.

The following describes some embodiments of this application in detail. However, this application may be embodied in many different implementations and should not be construed as being limited to the example embodiments set forth herein. Rather, these example embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, or when an element A is referred to as "connecting" to an element B, the element A may be directly connected to the element B, or an intervening element C may be present therebetween such that the element A and the element B are indirectly connected to each other.

Further, the use of "may" in the descriptions of some embodiments of this application means "one or more embodiments of this application".

The technical terms used herein are merely intended to describe specific embodiments rather than to limit this application. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

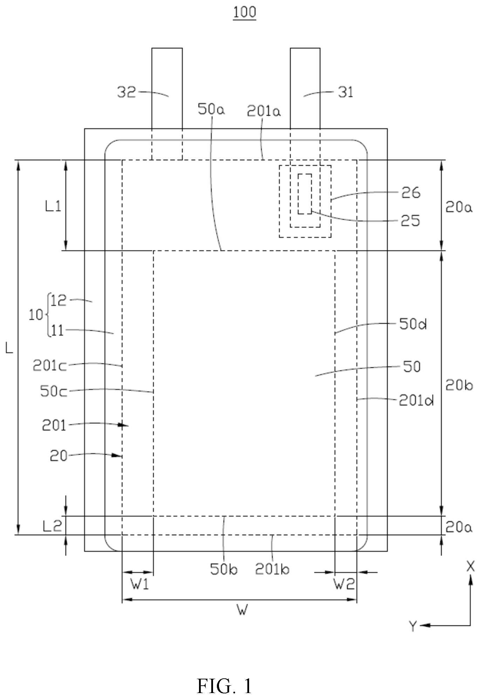

Referring to FIG. 1, an embodiment of this application provides a secondary battery 100, including a housing 10, an electrode assembly 20, an electrolyte, and a metal plate. The electrode assembly 20 and the electrolyte are accommodated in the housing 10. The metal plate is connected to the electrode assembly 20 and extends from one side of the housing 10 along a first direction X to connect to an external component. In this embodiment, the metal plate includes a first metal plate 31 and a second metal plate 32, where the first metal plate 31 and the second metal plate 32 are located on the same side of the secondary battery 100.

The housing 10 may be a packaging bag obtained by packaging with a packaging film (such as an aluminum-plastic film or a steel-plastic film), that is, the secondary battery 100 is a soft package battery. Specifically, the housing 10 includes a main body portion 11 and a packaging portion 12, where the main body portion 11 is provided with an accommodation cavity for accommodating the electrode assembly 20, and the packaging portion 12 extends from an edge of the main body portion 11 and is used for sealing the main body portion 11. The first metal plate 31 and the second metal plate 32 pass through the packaging portion 12 and extend along the first direction X. In another embodiment, the housing 10 is a metal housing, for example, a steel shell, aluminum shell, or the like.

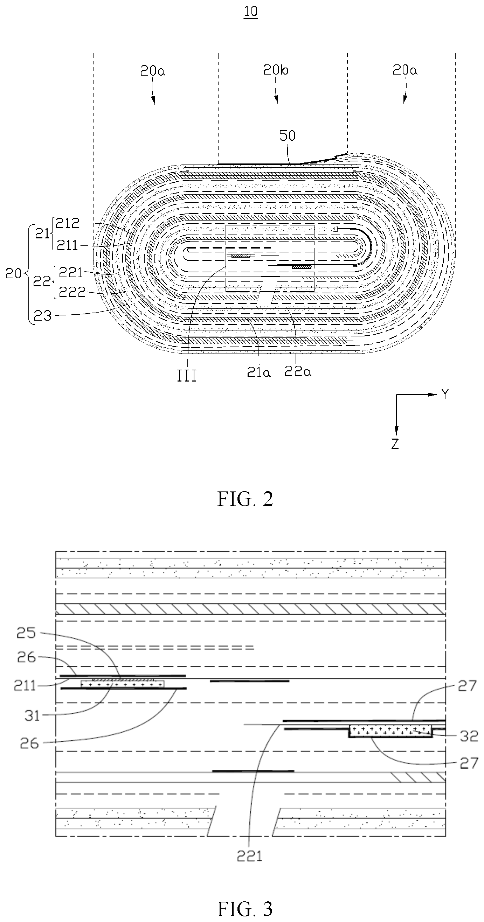

Referring to FIG. 2, the electrode assembly 20 includes a first electrode sheet 21, a second electrode sheet 22, and a separator 23 disposed between the first electrode sheet 21 and the second electrode sheet 22. In this embodiment, the electrode assembly 20 is configured as a wound structure, in which the first electrode sheet 21, the separator 23, and the second electrode sheet 22 are sequentially stacked along a second direction Z perpendicular to the first direction X and then wound to form a wound structure. The wound structure has a flat portion and a curved portion, where the flat portion is a portion where the first electrode sheet 21, the separator 23, or the second electrode sheet 22 extends straight after winding, and the curved portion is a portion where the first electrode sheet 21, the separator 23, or the second electrode sheet 22 extends curved after winding. In another embodiment, the electrode assembly 20 is configured as a laminated structure, in which the first electrode sheet 21, the separator 23, and the second electrode sheet 22 are alternately stacked along the second direction Z to form a laminated structure. The first electrode sheet 21 includes a first electrode sheet layer 21a, and the second electrode sheet 22 includes a second electrode sheet layer 22a disposed adjacent to the first electrode sheet layer 21a in the second direction Z. When the electrode assembly 20 is configured as a wound structure, the first electrode sheet layer 21a is one of a plurality of layers of electrode sheets formed after winding the first electrode sheet 21, and the second electrode sheet layer 22a is one of a plurality of layers of electrode sheets formed after winding the second electrode sheet. When the electrode assembly 20 is configured as a laminated structure, the first electrode sheet layer 21a is one of a plurality of stacked first electrode sheets 21, and the second electrode sheet layer 22a is one of a plurality of stacked second electrode sheets 22.

The first electrode sheet 21 includes a first current collector 211 and a first active material layer 212 disposed on at least one surface of the first current collector 211. The second electrode sheet 22 includes a second current collector 221 and a second active material layer 222 disposed on at least one surface of the second current collector 221. The first metal plate 31 is connected to the first current collector 211, and the second metal plate 32 is connected to the second current collector 221. In this embodiment, the first electrode sheet 21 is a positive electrode sheet, and the second electrode sheet 22 is a negative electrode sheet. The first current collector 211 may be any known current collector, for example, aluminum foil, aluminum alloy foil, or composite current collector. The second current collector 221 may be any known current collector, for example, copper foil, copper alloy foil, or composite current collector. The first active material layer 212 includes a positive electrode active material, and the positive electrode active material includes at least one of lithium cobaltate, lithium manganate, lithium nickelate, lithium nickel cobalt manganate, lithium iron phosphate, lithium manganese iron phosphate, lithium vanadium phosphate, lithium vanadoxy phosphate, a lithium-rich manganese-based material, lithium nickel cobalt aluminate, and combinations thereof. The second active material layer 222 includes a negative electrode active material, and the negative electrode active material is selected from at least one of a graphite material, an alloy material, lithium metal, or lithium metal alloy. The graphite material may be selected from at least one of artificial graphite or natural graphite; and the alloy material may be selected from at least one of silicon, silicon oxide, tin, or titanium sulfide. The first active material layer 212 and the second active material layer 222 may also include a conductive agent and a binder. The conductive agent includes at least one of conductive carbon black, carbon nanotubes, carbon fibers, or graphene. The binder includes at least one of styrene-butadiene rubber, polyvinyl alcohol, polytetrafluoroethylene, polyvinylidene fluoride, or sodium carboxymethyl cellulose.

Referring to FIG. 1, FIG. 2, and FIG. 4, the electrode assembly 20 further includes a first surface 201 and a second surface 202 opposite to each other in the second direction Z. The first surface 201 is constituted by the surface of the outermost first electrode sheet 21, second electrode sheet 22, and/or separator 23 on one side in the second direction Z, and the second surface 202 is constituted by the surface of the outermost first electrode sheet 21, second electrode sheet 22, and/or separator 23 on another side in the second direction Z. In the first direction X, the first surface 201 includes first end 201a and second end 201b opposite to each other, and the first end 201a is closer to the metal plate than the second end 201b. When viewed along the second direction Z, the first metal plate 31 and the second metal plate 32 protrude from the electrode assembly 20 at the first end 201a.

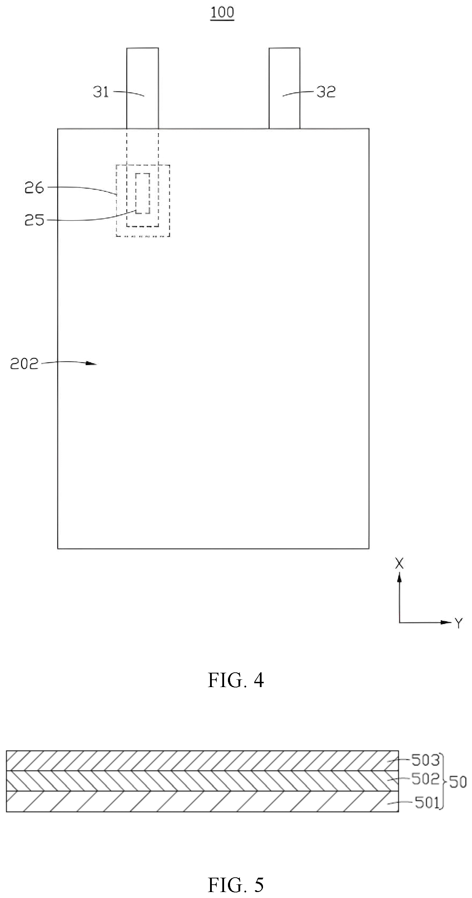

Referring to FIG. 1 and FIG. 4, the secondary battery 100 further includes an adhesive member 50. The adhesive member 50 is disposed on the first surface 201 and adheres the electrode assembly 20 and the housing 10. In the first direction X, the adhesive member 50 includes a first side 50a located on a side of the first end 201a and a second side 50b located on a side of the second end 201b. The first side 50a and the second side 50b are opposite to each other in the first direction X, and the first side 50a is closer to the first end 201a than the second side 50b. A distance between the first end 201a and the first side 50a is L1, and a distance between the second end 201b and the second side 50b is L2, where L1 > L2. The provision of the adhesive member 50 improves the bonding force between the electrode assembly 20 and the housing 10, lowering the risk of relative displacement between the electrode assembly 20 and the housing 10, thereby improving the drop pass rate. In addition, the provision of the adhesive member 50 leads to a relatively large thickness of the region of the secondary battery 100 opposite to the adhesive member 50, during the manufacturing pressing process of the secondary battery 100, the region opposite to the adhesive member 50 experiences less pressure and a smaller compression degree compared to other regions, making the distance between the first electrode sheet layer 21a and the second electrode sheet layer 22a in this region larger, and allowing to retain more electrolyte, which is conducive to mitigating lithium precipitation in this region.

Referring to FIG. 1, FIG. 2, and FIG. 4, the electrode assembly 20 further includes a first region 20a and a second region 20b sequentially connected along the first direction X, and the adhesive member 50 is disposed on the second region 20b. Specifically, when viewed along the second direction Z, a portion of the electrode assembly 20 covered by the adhesive member 50 serves as the second region 20b, and another portion of the electrode assembly 20 not covered by the adhesive member 50 serves as the first region 20a. A spacing between the first electrode sheet layer 21a and the second electrode sheet layer 22a located in the first region 20a is greater than the spacing between the first electrode sheet layer 21a and the second electrode sheet layer 22a located in the second region 20b, allowing the first region 20a to retain more electrolyte compared to the second region 20b, which is conducive to mitigating lithium precipitation in the first region 20a.

Referring to FIG. 3, in some embodiments, the first metal plate 31 is welded to the first current collector 211. A weld mark 25 is formed between the first metal plate 31 and the first current collector 211. The electrode assembly 20 further includes an insulating layer 26. The insulating layer 26 is disposed on a surface of the first current collector 211 facing away from the weld mark 25 and covers the weld mark 25, so as to reduce the occurrence of puncture of separator 23 caused by burrs in the weld mark, lowering the risk of a short circuit caused by contact between the first electrode sheet 21 and the second electrode sheet 22. The insulating layer 26 may also be disposed on the surface of the first current collector 211 provided with the first metal plate 31, and covers the weld mark 25 and a portion of the first metal plate 31, so as to further reduce the occurrence of puncture of separator 23 caused by burrs in the weld mark. The insulating layer 26 contains an insulating material, and the insulating material is selected from at least one of polyethylene, polypropylene, phenolic resin, melamine resin, unsaturated polyester resin, epoxy resin, silicone resin, or polyurethane.

In some embodiments, the second metal plate 32 is welded to the second current collector 221, and a weld mark (not shown in the drawings) is formed between the second metal plate 32 and the second current collector 221. The electrode assembly 20 further includes an insulating layer 27. The insulating layer 27 is disposed on a surface of the second current collector 221 facing away from the corresponding weld mark and covers the corresponding weld mark, so as to reduce the occurrence of puncture of separator 23 caused by burrs in the weld mark. The material of the insulating layer 27 and the material of the insulating layer 26 may be the same or different. In some embodiments, the insulating layer 27 includes at least one of polyethylene, polypropylene, phenolic resin, melamine resin, unsaturated polyester resin, epoxy resin, silicone resin, or polyurethane.

Referring to FIG. 1, when viewed along the second direction Z, the adhesive member 50 does not overlap with the first metal plate 31 and the insulating layer 26. When viewed along the second direction Z, the adhesive member 50 does not overlap with the first metal plate 31 and the insulating layer 26, avoiding the problem of increasing the overall thickness of the secondary battery 100 due to their overlapping, which is conducive to improving the volumetric energy density.

In some embodiments, in the first direction X, a length of the electrode assembly 20 is L mm, where 0.3 ≤ L1/L ≤ 0.6. For example, L1/L may be 0.3, 0.4, 0.5, 0.6, or the like. When L1/L satisfies the above range, the adhesive member 50 has sufficient dimensions in the first direction X, ensuring a firm adhesion between the electrode assembly 20 and the housing 10, which is conducive to improving the drop pass rate. The adhesive member 50 can avoid the metal plate in the first direction X, which can reduce its impact on the volumetric energy density; while ensuring that during the manufacturing pressing process, the pressure applied to the second region 20b of the electrode assembly 20 is greater than the pressure applied to the first region 20a, thereby making the spacing between the first electrode sheet layer 21a and the second electrode sheet layer 22a located in the first region 20a greater than the spacing between the first electrode sheet layer 21a and the second electrode sheet layer 22a located in the second region 20b. Preferably, 0.35 ≤ L1/L ≤ 0.45, which is more conducive to maintaining appropriate adhesion performance, improving the drop pass rate, reducing the impact on the volumetric energy density, and ensuring that the pressure applied to the second region is greater than the pressure applied to the first region, thereby making the spacing between the first electrode sheet layer 21a and the second electrode sheet layer 22a located in the first region greater than the spacing between the first electrode sheet layer 21a and the second electrode sheet layer 22a located in the second region.

In some embodiments, 0 ≤ L2/L ≤ 0.2. For example, L2/L may be 0, 0.1, 0.2, or the like. When L2/L satisfies the above range, the adhesive member 50 has sufficient dimensions in the first direction X, ensuring a firm adhesion between the electrode assembly 20 and the housing 10, which is conducive to improving the drop pass rate. While ensuring that during the manufacturing pressing process, the pressure applied to the second region 20b of the electrode assembly 20 is greater than the pressure applied to the first region 20a, thereby making the spacing between the first electrode sheet layer 21a and the second electrode sheet layer 22a located in the first region 20a greater than the spacing between the first electrode sheet layer 21a and the second electrode sheet layer 22a located in the second region 20b. Preferably, 0.05 ≤ L2/L ≤ 0.1, leading to better effect of improving the drop pass rate, while ensuring that during the manufacturing pressing process, the pressure applied to the second region 20b of the electrode assembly 20 is greater than the pressure applied to the first region 20a, thereby making the spacing between the first electrode sheet layer 21a and the second electrode sheet layer 22a located in the first region 20a greater than the spacing between the first electrode sheet layer 21a and the second electrode sheet layer 22a located in the second region 20b.

In some embodiments, in a third direction Y perpendicular to both the first direction X and the second direction Z, the first surface 201 includes third end 201c and fourth end 201d opposite to each other, the adhesive member 50 includes a third side 50c located on a side of the third end 201c and a fourth side 50d located on a side of the fourth end 201d. The first side 50a, the third side 50c, the second side 50b, and the fourth side 50d are sequentially connected. In the third direction Y, a width of the electrode assembly is W mm, a distance between the third end 201c and the third side 50c is W1 mm, and a distance between the fourth end 201d and the fourth side 50d is W2 mm, where 0 ≤ W1/W ≤ 0.3, and 0 ≤ W2/W ≤ 0.3. For example, W1/W and W2/W each may be 0, 0.1, 0.2, 0.3, or the like. When W1/W and W2/W satisfy the above range, the adhesive member 50 has sufficient dimensions in the third direction Y, ensuring a firm adhesion between the electrode assembly 20 and the housing 10. Preferably, 0.1 ≤ W1/W ≤ 0.25, and 0.1 ≤ W2/W ≤ 0.25. For the electrode assembly 20 configured as a wound structure, a curved portion is tighter compared to the flat portion. If a distance between the adhesive member 50 and the third side 50c or the fourth side 50d in the third direction Y is too small, the curved portion of the electrode assembly 20 is prone to being pulled and damaged during dropping. When W1/W and W2/W are greater than or equal to 0.1, the risk of the curved portion of the electrode assembly 20 being pulled and damaged during dropping can be lowered.

Referring to FIG. 5, in some embodiments, the adhesive member 50 includes a first adhesive layer 501, a substrate layer 502, and a second adhesive layer 503 sequentially stacked, where the first adhesive layer 501 is adhered to the housing, and the second adhesive layer 503 is adhered to the electrode assembly. The substrate layer 502 includes an insulating material, and the insulating material is selected from at least one of polyethylene, polypropylene, polyethylene terephthalate, or polyimide. The first adhesive layer 501 and the second adhesive layer 503 may each be a pressure-sensitive adhesive or hot-melt adhesive. In some embodiments, the first adhesive layer 501 is a hot-melt adhesive and includes at least one of polymethyl methacrylate, polyacrylic acid, polyacrylate, polyacrylonitrile, polyvinylpyrrolidone, polyvinyl acetate, styrene-isoprene-styrene block copolymer, ethylene-vinyl acetate copolymer, or polyimide. The second adhesive layer 503 is a pressure-sensitive adhesive and includes at least one of polyethylene oxide, acrylonitrile-styrene-butadiene copolymer, styrene-butadiene copolymer, polyvinyl alcohol, polyvinyl methyl ether, polyvinyl ethyl ether, polyvinylidene fluoride, polytetrafluoroethylene, polyhexafluoropropylene, polymethyl methacrylate, polypropylene, polyethylene, or polyamide.

In some embodiments, a thickness of the adhesive member 50 is in a range of 10 mm to 50 mm, a thickness of the substrate layer 502 is in a range of 2 mm to 30 mm, a thickness of the first adhesive layer 501 is in a range of 2 mm to 10 mm, and a thickness of the second adhesive layer 503 is in a range of 2 mm to 10 mm. When the thickness of the adhesive member 50 is in the above range, during the manufacturing pressing process of the secondary battery 100, the difference between the pressure applied to the first region 20a and the pressure applied to the second region 20b is significant, thereby making the spacing between the first electrode sheet layer 21a and the second electrode sheet layer 22a located in the first region 20a significant greater than the spacing between the first electrode sheet layer 21a and the second electrode sheet layer 22a located in the second region 20b, which is conducive to mitigating lithium precipitation. When the thickness of the first adhesive layer 501/second adhesive layer 503 is less than 2 mm, the thickness is too thin, resulting in insufficient adhesive force and relatively weak fixing ability. When the thickness of the first adhesive layer 501/second adhesive layer 503 is greater than 10 mm, the thickness is too thick, which may easily lead to bubbles and adhesive overflow. Preferably, the thickness of the adhesive member 50 is in a range of 18 mm to 30 mm, the thickness of the substrate layer 502 is in a range of 10 mm to 15 mm, the thickness of the first adhesive layer 501 is in a range of 4 mm to 8 mm, the thickness of the second adhesive layer 503 is in a range of 4 mm to 8 mm.

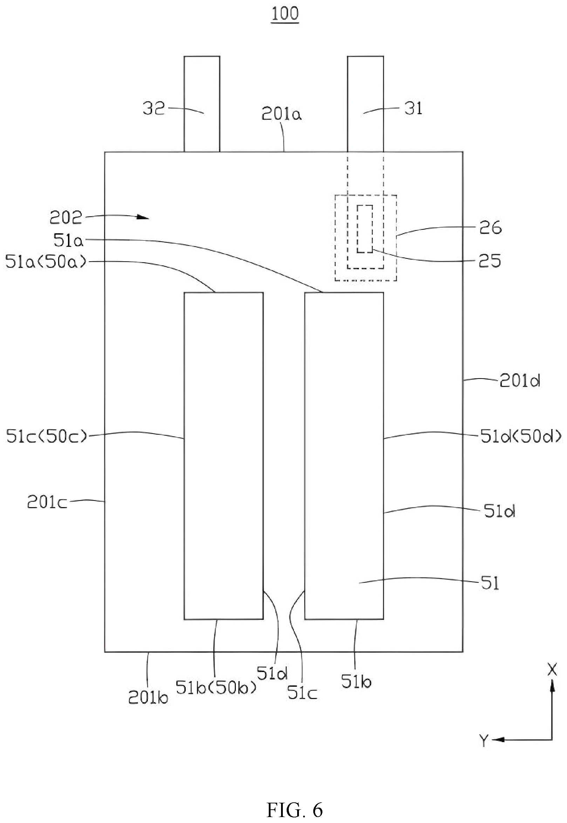

Referring to FIG. 6, in some embodiments, the adhesive member 50 includes a plurality of sub-adhesive members 51. The plurality of sub-adhesive members 51 are spaced apart on the first surface 201. FIG. 6 shows two sub-adhesive members 51. The number of sub-adhesive members 51 may be set according to actual needs. Each sub-adhesive member 51 includes a first edge 51a located on a side of the first end 201a, a second edge 51b located on a side of the second end 201b, a third edge 51c located on a side of the third end 201c, and a fourth edge 51d located on a side of the fourth end 201d, where the first edge 51a, third edge 51c, second edge 51b, and fourth edge 51d are sequentially connected. In this embodiment, the plurality of sub-adhesive members 51 are spaced apart along the third direction Y on the first surface 201. The first edges 51a of the plurality of sub-adhesive members 51 located on one side of the first direction X together constitute the first side 50a of the adhesive member 50, the second edges 51b of the plurality of sub-adhesive members 51 located on another side of the first direction X together constitute the second side 50b of the adhesive member 50, the third edge 51c of the outermost sub-adhesive member 51 on one side of the third direction Y constitutes the third side 50c of the adhesive member 50, and the fourth edge 51d of the outermost sub-adhesive member 51 on another side of the third direction Y constitutes the fourth side 50d of the adhesive member 50. In the third direction Y, the spacing between adjacent two sub-adhesive members 51 is less than or equal to the smaller one of the widths of the adjacent two sub-adhesive members 51. This ensures a sufficient adhesion area between the adhesive member 50 and both the electrode assembly 20 and the housing 10, and the spaced plurality of sub-adhesive members 51 can disperse stress, thereby improving the drop pass rate. When the spacing between adjacent two sub-adhesive members 51 is greater than the smaller one of the widths of the adjacent two sub-adhesive members 51, the housing 10 pulls the sub-adhesive members 51 during dropping, and the generated pulling force can easily cause the portion of the electrode assembly 20 located between adjacent two sub-adhesive members 51 to be pulled and damaged.

In another embodiment, the plurality of sub-adhesive members 51 are spaced apart along the first direction X on the first surface 201. The first edge 51a of the outermost sub-adhesive member 51 on one side of the first direction X constitutes the first side 50a of the adhesive member 50, the second edge 51b of the outermost sub-adhesive member 51 on another side of the first direction X constitutes the second side 50b of the adhesive member 50, the third edges 51c of the plurality of sub-adhesive members 51 located on one side of the third direction Y together constitute the third side 50c of the adhesive member 50, and the fourth edges 51d of the plurality of sub-adhesive members 51 located on another side of the third direction Y together constitute the fourth side 50d of the adhesive member 50. In the first direction X, the spacing between adjacent two sub-adhesive members 51 is less than or equal to the smaller one of the widths of the adjacent two sub-adhesive members 51.

An embodiment of this application also provides an electronic apparatus, including any one of the secondary batteries as described above. The electronic apparatus of this application can be, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a lighting appliance, a toy, a game console, a clock, an electric tool, a flash lamp, a camera, a large household battery, and a lithium-ion capacitor.

Specific examples and comparative examples below are used to describe the performance of the secondary battery provided in this application.

### Example 1-1

Preparation of positive electrode sheet: A positive electrode active material (lithium cobaltate), a conductive agent (conductive carbon black), and a binder (polyvinylidene fluoride) at a weight ratio of 97.5:1:1.5 were dissolved in an N-methylpyrrolidone solution to form a positive electrode slurry with a solid content of 75%. Aluminum foil was used as a current collector, and the positive electrode slurry was applied on a surface of the positive current collector to obtain a positive electrode active material layer. Subsequently, after cold pressing and cutting, a negative electrode sheet was obtained.

Preparation of negative electrode sheet: A negative electrode active material (graphite), a conductive agent (conductive carbon black), a thickener (sodium carboxymethyl cellulose), and a binder (styrene-butadiene rubber) were mixed at a mass ratio of 97.5:1:0.5:1, then added with deionized water as a solvent, and stirred uniformly to obtain a negative electrode slurry with a solid content of 50 wt%. Copper foil was used as a current collector, and the negative electrode slurry was applied on a surface of the negative current collector to obtain a negative electrode active material layer. Subsequently, after cold pressing and cutting, a negative electrode sheet was obtained.

Preparation of separator: A polyethylene film was selected as the separator.

Preparation of electrolyte: Ethylene carbonate (EC), diethyl carbonate (DEC), propylene carbonate (PC), propyl propionate (PP), and vinylene carbonate (VC) were mixed at a weight ratio of 20:30:20:28:2 to obtain an organic solvent, then fully dried lithium salt LiPF₆ and the organic solvent were mixed at a weight ratio of 8:92 to obtain the electrolyte.

Preparation of lithium-ion battery: The positive electrode sheet, polyethylene separator, and negative electrode sheet were sequentially stacked in order, with the separator placed between the positive electrode sheet and the negative electrode sheet, and wound to obtain the electrode assembly. The adhesive member was adhered to a surface of the electrode assembly, the electrode assembly was placed in an aluminum-plastic film packaging bag, and was subjected to hot pressing and bonding at a preset pressure,. After electrolyte injection and formation, a lithium-ion battery was obtained. The spacing between the first electrode sheet layer and the second electrode sheet layer located in the first region was greater than the spacing between the first electrode sheet layer and the second electrode sheet layer located in the second region. A length L of the electrode assembly was 86 mm, and a width W was 62 mm. The adhesive member included two sub-adhesive members, a length of the sub-adhesive members was 50 mm, a width was 20 mm, and the spacing between the two sub-adhesive members was 1 mm. A distance L1 between the first side of the adhesive member and the first end of the electrode assembly was 31 mm, a distance L2 between the second side and the second end was 5 mm, a distance W1 between the third side and the third end was 13 mm, and a distance W2 between the fourth side and the fourth end was 8 mm.

### Example 1-2 to Example 1-18 and Comparative Examples 1 to 4

The difference from Example 1-1 lied in that at least one of L1 and L2 was different. Detailed parameters are given in Table 1.

Drop tests and lithium precipitation tests were performed on each example and comparative example, and the test results were shown in Table 1.

Test of spacing between first electrode sheet layer and second electrode sheet layer:

A CT device was used to scan its cross-section, and the spacing between the first electrode sheet layer and the second electrode sheet layer in the first region and the spacing between the first electrode sheet layer and the second electrode sheet layer in the second region were measured.

### Drop test:

The lithium-ion battery was pretreated at 25°C, and after the lithium-ion battery was left standing for 60 min in a normal temperature environment, the voltage of the lithium-ion battery before the drop test was tested; the lithium-ion battery was loaded into a fixture, and a drop device was used to freely drop from 1.5 m height from the ground in the following order: head - tail - head right corner - tail right corner - head left corner - tail left corner (angle: 45±15°) for 6 rounds. After the drop was completed, the voltage of the lithium-ion battery was measured and recorded, and the appearance of the lithium-ion battery was checked and photographed before and after the test. Criteria for passing the drop test were: no smoke, no electrolyte leakage, and voltage drop is less than 30 mV; where, the test method for voltage drop was to use an internal resistance tester to test the voltage of the battery before and after the drop respectively, and the voltage drop was the difference between the two. 20 samples were taken to perform the drop test, and the drop pass rate = number of samples passing the drop test / 20.

### Lithium precipitation test:

At 25°C, the lithium-ion battery was charged to 4.30 V at a constant current of X (X=1, 2, 3)C, then charged to 0.05C at a constant voltage of 4.30 V, and left standing for 5 min; then discharged to 2.0 V at a constant current of 1C, and left standing for 5 min. This was taken as one cycle, and after repeating for 10 cycles, the battery was disassembled in a fully charged state to obtain the negative electrode sheet. If any region with an area greater than or equal to 2 mm² where lithium precipitation was observed on the negative electrode sheet opposite to the first region, it was determined that as lithium precipitation had occurred. 20 samples were taken to perform the lithium precipitation test, and X/20 indicated that the number of samples with lithium precipitation among the 20 tested samples was X.

**Table 1**

| | L1 (mm) | L2 (mm) | L (mm) | L1/L | L2/L | Drop pass rate | Lithium precipitation situation |
|---|---|---|---|---|---|---|---|
| Example 1-1 | 35 | 6 | 86 | 0.41 | 0.07 | 100% | 0/20 |
| Example 1-2 | 15 | 6 | 86 | 0.17 | 0.07 | 87% | 8/20 |
| Example 1-3 | 22 | 6 | 86 | 0.26 | 0.07 | 89% | 6/20 |
| Example 1-4 | 26 | 6 | 86 | 0.30 | 0.07 | 92% | 3/20 |
| Example 1-5 | 27 | 6 | 86 | 0.31 | 0.07 | 95% | 2/20 |
| Example 1-6 | 30 | 6 | 86 | 0.35 | 0.07 | 96% | 1/20 |
| Example 1-7 | 39 | 6 | 86 | 0.45 | 0.07 | 97% | 0/20 |
| Example 1-8 | 52 | 6 | 86 | 0.60 | 0.07 | 80% | 0/20 |
| Example 1-9 | 55 | 6 | 86 | 0.64 | 0.07 | 50% | 0/20 |
| Example 1-10 | 60 | 6 | 86 | 0.70 | 0.07 | 40% | 0/20 |
| Example 1-11 | 35 | 0 | 86 | 0.41 | 0.00 | 97% | 0/20 |
| Example 1-12 | 35 | 4 | 86 | 0.41 | 0.05 | 98% | 0/20 |
| Example 1-13 | 35 | 5 | 86 | 0.41 | 0.06 | 100% | 0/20 |
| Example 1-14 | 35 | 9 | 86 | 0.41 | 0.10 | 96% | 0/20 |
| Example 1-15 | 35 | 13 | 86 | 0.41 | 0.15 | 94% | 0/20 |
| Example 1-16 | 35 | 17 | 86 | 0.41 | 0.20 | 77% | 0/20 |
| Example 1-17 | 35 | 26 | 86 | 0.41 | 0.30 | 45% | 2/20 |
| Example 1-18 | 35 | 30 | 86 | 0.41 | 0.35 | 45% | 1/20 |
| Comparative Example 1 | 6 | 6 | 86 | 0.07 | 0.07 | 70% | 10/20 |
| Comparative Example 2 | 35 | 35 | 86 | 0.41 | 0.41 | 30% | 3/20 |
| Comparative Example 3 | 35 | 40 | 86 | 0.41 | 0.47 | 20% | 3/20 |
| Comparative Example 4 | 6 | 35 | 86 | 0.07 | 0.41 | 60% | 13/20 |

By comparing the examples and comparative examples in Table 1, it can be learned that when L1 > L2, the probability of lithium precipitation occurring in the lithium-ion battery is smaller. This is because when L1 is greater than L2, during the manufacturing pressing process, the pressure applied to the second region of the electrode assembly is greater than the pressure applied to the first region, thereby making the spacing between the first electrode sheet layer and the second electrode sheet layer located in the first region greater than the spacing between the first electrode sheet layer and the second electrode sheet layer located in the second region, and allowing the first region to retain more electrolyte. This mitigates lithium precipitation at the first region.

It can be seen from Table 1 that compared to Example 1-2, Example 1-3, Example 1-9, and Example 1-10, Example 1-1 and Example 1-4 to Example 1-8 satisfy 0.3 ≤ L1/L ≤ 0.6. When 0.3 ≤ L1/L ≤ 0.6 is satisfied, the adhesive member has sufficient dimensions in the first direction, ensuring a firm adhesion between the electrode assembly and the housing, which is conducive to improving the drop pass rate. This can also ensure that during the manufacturing pressing process, the pressure applied to the second region of the electrode assembly is greater than the pressure applied to the first region, thereby making the spacing between the first electrode sheet layer and the second electrode sheet layer located in the first region greater than the spacing between the first electrode sheet layer and the second electrode sheet layer located in the second region, which is conducive to mitigating lithium precipitation, resulting in a higher drop pass rate and fewer occurrences of lithium precipitation. In Example 1-1 and Example 1-4 to Example 1-8, Example 1-1, Example 1-6, and Example 1-7 satisfy 0.35 ≤ L1/L ≤ 0.45, and exhibit better effect in mitigating lithium precipitation and drop pass rate.

It can be seen from Table 1 that compared to Example 1-17 and Example 1-18, Example 1-11 to Example 1-16 satisfy 0 ≤ L2/L ≤ 0.2. When 0 ≤ L2/L ≤ 0.2 is satisfied, the adhesive member has sufficient dimensions in the first direction, ensuring a firm adhesion between the electrode assembly and the housing, which is conducive to improving the drop pass rate. This can also ensure that during the manufacturing pressing process, the pressure applied to the second region of the electrode assembly is greater than the pressure applied to the first region, thereby making the spacing between the first electrode sheet layer and the second electrode sheet layer located in the first region greater than the spacing between the first electrode sheet layer and the second electrode sheet layer located in the second region, which is conducive to mitigating lithium precipitation, resulting in a higher drop pass rate and fewer occurrences of lithium precipitation. In Example 1-11 to Example 1-16, Example 1-12 to Example 1-14 satisfy 0.05 ≤ L2/L ≤ 0.1, and exhibit better effect in improving the drop pass rate.

### Example 2-1 to Example 2-18

The difference from Example 1-1 lied in that at least one of W1 and W2 was different. Detailed parameters are given in Table 2. Drop tests and lithium precipitation tests were performed on each example, and the test results were shown in Table 2.

**Table 2**

| | W1 (mm) | W2 (mm) | W (mm) | W1/W | W2/W | Drop pass rate | Lithium precipitation situation |
|---|---|---|---|---|---|---|---|
| Example 2-1 | 0 | 11 | 62 | 0.00 | 0.18 | 80% | 0/20 |
| Example 2-2 | 4 | 11 | 62 | 0.06 | 0.18 | 85% | 0/20 |
| Example 2-3 | 6 | 11 | 62 | 0.10 | 0.18 | 88% | 0/20 |
| Example 2-4 | 9 | 11 | 62 | 0.15 | 0.18 | 90% | 0/20 |
| Example 2-5 | 12 | 11 | 62 | 0.19 | 0.18 | 95% | 0/20 |
| Example 1-1 | 13 | 11 | 62 | 0.21 | 0.18 | 100% | 0/20 |
| Example 2-6 | 16 | 11 | 62 | 0.25 | 0.18 | 98% | 0/20 |
| Example 2-7 | 19 | 11 | 62 | 0.30 | 0.18 | 95% | 0/20 |
| Example 2-8 | 23 | 11 | 62 | 0.37 | 0.18 | 80% | 0/20 |
| Example 2-9 | 31 | 11 | 62 | 0.50 | 0.18 | 60% | 0/20 |
| Example 2-10 | 13 | 0 | 62 | 0.21 | 0.00 | 80% | 0/20 |
| Example 2-11 | 13 | 4 | 62 | 0.21 | 0.06 | 85% | 0/20 |
| Example 2-12 | 13 | 6 | 62 | 0.21 | 0.10 | 87% | 0/20 |
| Example 2-13 | 13 | 9 | 62 | 0.21 | 0.15 | 94% | 0/20 |
| Example 2-14 | 13 | 12 | 62 | 0.21 | 0.19 | 98% | 0/20 |
| Example 2-15 | 13 | 16 | 62 | 0.21 | 0.25 | 96% | 0/20 |
| Example 2-16 | 13 | 19 | 62 | 0.21 | 0.30 | 70% | 0/20 |
| Example 2-17 | 13 | 23 | 62 | 0.21 | 0.37 | 67% | 0/20 |
| Example 2-18 | 13 | 31 | 62 | 0.21 | 0.50 | 57% | 0/20 |

It can be seen from Table 2 that compared to Example 2-8 and Example 2-9, Example 2-1 to Example 2-7 and Example 1-1 satisfy 0 ≤ W1/W ≤ 0.3. When 0 ≤ W1/W ≤ 0.3 is satisfied, the adhesive member has sufficient dimensions in the third direction Y, ensuring a firm adhesion between the electrode assembly and the housing, resulting in a higher drop pass rate. It can also be seen from Table 2 that the ratio of W1/W does not affect lithium precipitation. In Example 2-1 to Example 2-7 and Example 1-1, Example 2-3 to Example 2-6 and Example 1-1 satisfy 0.1 ≤ W1/W ≤ 0.25, and exhibit better effect in improving the drop pass rate.

It can be seen from Table 2 that compared to Example 2-17 and Example 2-18, Example 2-10 to Example 2-16 and Example 1-1 satisfy 0 ≤ W2/W ≤ 0.3. When 0 ≤ W2/W ≤ 0.3 is satisfied, the adhesive member has sufficient dimensions in the third direction Y, ensuring a firm adhesion between the electrode assembly and the housing, resulting in a higher drop pass rate. It can also be seen from Table 2 that the ratio of W2/W does not affect lithium precipitation. In Example 2-10 to Example 2-16 and Example 1-1, Example 2-12 to Example 2-15 and Example 1-1 satisfy 0.1 ≤ W2/W ≤ 0.25, and exhibit better effect in improving the drop pass rate.

### Example 3-1 to Example 3-5

The difference from Example 1-1 lied in that the width of the sub-adhesive members and the spacing between adjacent two sub-adhesive members were different. Detailed parameters are given in Table 3. Two sub-adhesive members were provided, recorded as the first sub-adhesive member and the second sub-adhesive member in Table 3, the lengths of the two sub-adhesive members were equal, and the widths of the two sub-adhesive members were equal or different in different examples. Drop tests and lithium precipitation tests were performed on each example, and the test results were shown in Table 3.

**Table 3**

| | Width of first sub-adhesive member (mm) | Width of second sub-adhesive member (mm) | Length of sub-adhesive member (mm) | Spacing between sub-adhesive members (mm) | Drop pass rate | Lithium precipitation situation |
|---|---|---|---|---|---|---|
| Example 3-1 | 19 | 19 | 45 | 0 | 100% | 0/20 |
| Example 1-1 | 15 | 15 | 45 | 8 | 100% | 0/20 |
| Example 3-2 | 13 | 13 | 45 | 12 | 90% | 0/20 |
| Example 3-3 | 10 | 10 | 45 | 18 | 80% | 0/20 |
| Example 3-4 | 8 | 8 | 45 | 22 | 70% | 0/20 |
| Example 3-5 | 5 | 5 | 45 | 28 | 40% | 0/20 |
| Example 3-6 | 15 | 5 | 45 | 18 | 63% | 0/20 |
| Example 3-7 | 15 | 8 | 45 | 15 | 75% | 0/20 |
| Example 3-8 | 15 | 10 | 45 | 13 | 77% | 0/20 |
| Example 3-9 | 15 | 17 | 45 | 6 | 90% | 0/20 |
| Example 3-10 | 15 | 20 | 45 | 3 | 92% | 0/20 |
| Example 3-11 | 15 | 23 | 45 | 0 | 98% | 0/20 |

It can be seen from Table 3 that compared to Example 3-3 to Example 3-8, Example 1-1, Example 3-1, Example 3-2, and Example 3-9 to Example 3-11 satisfy that the spacing between adjacent sub-adhesive members is less than the smaller one of the widths of the adjacent two sub-adhesive members. This ensures a sufficient adhesion area between the adhesive member and both the electrode assembly and the housing, and the spaced plurality of sub-adhesive members can disperse stress, therefore resulting in a higher drop pass rate. It can also be seen from Table 3 that the spacing between adjacent sub-adhesive members does not affect lithium precipitation.

The descriptions disclosed above are merely preferred embodiments of this application, and certainly cannot constitute any limitation on this application. Accordingly, equivalent changes made in accordance with this application still fall within the scope of this application.

## Claims

1. A secondary battery, comprising a housing, an electrode assembly, and a metal plate, wherein the electrode assembly is accommodated in the housing, the metal plate is connected to the electrode assembly and extends out of the housing along a first direction, the electrode assembly comprises a first electrode sheet, a separator, and a second electrode sheet sequentially stacked along a second direction perpendicular to the first direction, the first electrode sheet comprises a first electrode sheet layer, and the second electrode sheet comprises a second electrode sheet layer disposed adjacent to the first electrode sheet layer in the second direction, wherein
the secondary battery further comprises an adhesive member, the electrode assembly further comprises a first surface, and the adhesive member is disposed on the first surface and adheres the electrode assembly and the housing;
in the first direction, the first surface comprises first end and second end opposite to each other, the adhesive member comprises a first side and a second side opposite to each other in the first direction, the first side is closer to the first end than the second side, a distance between the first end and the first side is L1, a distance between the second end and the second side is L2, and L1 > L2; and
the electrode assembly comprises a first region and a second region sequentially connected along the first direction, the adhesive member is disposed on the second region, and a spacing between the first electrode sheet layer and the second electrode sheet layer located in the first region is greater than a spacing between the first electrode sheet layer and the second electrode sheet layer located in the second region.

2. The secondary battery according to claim 1, wherein in the first direction, a length of the electrode assembly is L, and 0.3 ≤ L1/L ≤ 0.6.

3. The secondary battery according to claim 2, wherein 0.35 ≤ L1/L ≤ 0.45.

4. The secondary battery according to claim 1, wherein 0 ≤ L2/L ≤ 0.2.

5. The secondary battery according to claim 4, wherein 0.05 ≤ L2/L ≤ 0.1.

6. The secondary battery according to claim 1, wherein in a third direction perpendicular to both the first direction and the second direction, the first surface comprises a third end and a fourth end opposite to each other, the adhesive member comprises a third side located on a side of the third end and a fourth side located on a side of the fourth end, and the first side, the third side, the second side, and the fourth side are sequentially connected; and in the third direction, a width of the electrode assembly is W, a distance between the third end and the third side is W1, a distance between the fourth end and the fourth side is W2, 0 ≤ W1/W ≤ 0.3, and 0 ≤ W2/W ≤ 0.3.

7. The secondary battery according to claim 6, wherein 0.1 ≤ W1/W ≤ 0.25, and 0.1 ≤ W2/W ≤ 0.25.

8. The secondary battery according to claim 1, wherein the adhesive member comprises a plurality of sub-adhesive members, the plurality of sub-adhesive members are spaced apart on the first surface, and a spacing between adjacent two sub-adhesive members is less than or equal to a smaller one of widths of the adjacent two sub-adhesive members.

9. The secondary battery according to claim 1, wherein the electrode assembly is configured as a wound structure.

10. The secondary battery according to claim 9, wherein the metal plate comprises a first metal plate, the first metal plate is welded to the first electrode sheet, a weld mark is formed between the first metal plate and the first electrode sheet; and the secondary battery further comprises an insulating layer, the insulating layer covering the weld mark and a portion of the first metal plate.

11. The secondary battery according to claim 10, wherein in the second direction, the adhesive member does not overlap with the first metal plate, and the adhesive member does not overlap with the insulating layer.

12. The secondary battery according to claim 1, wherein the adhesive member comprises a first adhesive layer, a substrate layer, and a second adhesive layer sequentially stacked, the first adhesive layer is adhered to the housing, and the second adhesive layer is adhered to the electrode assembly.

13. The secondary battery according to claim 12, wherein a thickness of the adhesive member is in a range of 10 mm to 50 mm.

14. The secondary battery according to claim 13, wherein the thickness of the adhesive member is in a range of 18 mm to 30 mm.

15. An electronic apparatus, comprising the secondary battery according to any one of claims 1 to 14.
